(19) Europäisches Patentamt
European Patent Office
Office européen des brevets

(11) **EP 0 527 524 B1**

(12) **EUROPEAN PATENT SPECIFICATION**

(45) Date of publication and mention
of the grant of the patent:
**03.06.1998 Bulletin 1998/23**

(51) Int Cl.6: **G06T 5/00**

(21) Application number: **92202358.5**

(22) Date of filing: **30.07.1992**

(54) **Image quality enhancing method**

Verfahren zur Qualitätsverbesserung von Bildern

Procédé pour l'amélioration de la qualité d'une image

(84) Designated Contracting States:
**BE DE FR GB NL**

(30) Priority: **13.08.1991 EP 91202072**

(43) Date of publication of application:
**17.02.1993 Bulletin 1993/07**

(73) Proprietor: **AGFA-GEVAERT N.V.**
**2640 Mortsel (BE)**

(72) Inventors:
• **Hayen, Lucien Alfred,**
**c/o Agfa-Gevaert NV, DIE 3800**
**B-2640 Mortsel (BE)**
• **Schoeters, Emile Paul, c/o Agfa-Gevaert NV**
**B-2640 Mortsel (BE)**

(56) References cited:
**EP-A- 0 182 423** **US-A- 4 231 065**
**US-A- 4 794 531**

## Description

Field of the invention.

The present invention is in the field of digital image processing, the invention more specifically relates to a method of enhancing the image quality of radiographic images for diagnostic purposes.

Description of the prior art

The major part of radiographic images nowadays is registered on radiographic film. Preferably intensifying screen-film combinations are used. The screen comprises a support and a fluorescent layer composed of a phosphor for emitting light upon stimulation dispersed in a binder resin and a protection layer. In radiographic operation, the image conversion screen is placed closely over the film so that the fluorescent layer faces the film. It is common practice that two image conversion screens are provided together with the radiographic film in a housing, e.g. in a cassette. When an object is exposed, x-rays are transmitted by the object onto the screen-film combination. The phosphor screen emits light and intensifies the exposure of the film.

The exposure contrast of parts of the human body that are of interest for diagnostic purposes is usually low. To overcome this problem, that is to produce a detectable density difference, photographic film with steep gradation is always used - films having a gradation of around 3 are routinely used. These films have a small exposure range which makes the image quality critically dependant on the exact exposure level. In any case only those image details falling within an exposure range of at most 10:1 will show optimal image quality. As a result details in an image will only be detected if superposed on a reasonably uniform area covering the whole of the diagnostically relevant image. By reasonably uniform area we mean that the dynamic range of the input exposure (dynamic range = ratio of maximum exposure to minimum exposure) should be within the limits in which the recording system is performing well. For film this means a range of about 10:1.

However, the human anatomy itself is in many situations a cause of non-uniformity in the image. For example, when a hand or a foot is imaged the mean exposure level at the detector plane will vary more or less linearly due to the increasing bone thickness. Other parts of the human body, as for instance the lateral lumbar spine, will produce more complicated variations in mean exposure level. So in many cases, image detail present in the primary exposure will be lost because of the small exposure latitude of the film, disappearing in regions of under- or over-exposure.

This problem has been described extensively. For example in Journal of Thoracic Imaging, vol. 5,1,90 page 29 it is described in this respect that emergency department evaluation of the cervical spine in cross-table lateral projection is frequently unsatisfactory because adequate exposure to ensure visualization of the C-7 vertebral body often results in gross overexposure of the prevertebral soft tissues and upper vertical spine.

In the prior art this problem was partially solved by using a gradual intensifying screen (also called a gradient screen) in the screen-film combination. Whereas ordinary conversion screens have an equal speed throughout the overall area so that the fluorescent light intensity of the light emitted by the phosphor layer is constant over the entire region, gradient phosphor screens are screens that provide a locally varying speed of the screen-film combination. This is commonly obtained by a varying thickness of the phosphor layer of the screen.

If the screen is manufactured so that the speed of the screen-film combination is inversely related to the expected mean exposure level more uniform recording is possible so that more details become distinguishable.

Such gradual screens are only advantageous when the extent and form of their speed variations are adapted to the anatomy of the patient being examined, including the variability introduced by the patient being thin or fat, tall or small, etc. Therefore optimally a large variety of gradual screens with different characteristics in the usual dimensions would be required.

The situation is further aggravated by the limitations of the manufacturing technology : the maximum exposure range that can be produced is around 4 : 1. So, adaptation of the gradual screen to each individual patient cannot be obtained.

Still further, the use of a variety of available screens enhances the possibility of making mistakes resulting in a time-consuming procedure both for the radiologist and the patient. As a consequence of mistakes additional exposures may be required which are harmful to the patient and bring about a waste of photographic recording material.

Recently a method has been developed according to which x-rays transmitted by an exposed object are stored on a reusable photostimulable phosphor screen. Examples of these photostimulable phosphors are extensively described in European patent application EP A 0 503 702.

The photostimulable phosphor screen is read-out by stimulating it with laser light so that it liberates its latent image by the emission of imagewise modulated light. The emitted light is then detected and converted into an electrical representation (more specifically into an analogue signal that is digitized). The electrical representation is subsequently used to control the recording head of an image reproducing system. For example, in a laser recorder the image signal is used to control the modulation of the output of the recording head so as to expose a photographic film with a scanning laser beam having an intensity corresponding to the digital image's numerical values. For diagnostic purposes the reproduction is viewed and analysed on a lightbox.

A very important characteristic of these photostimulable phosphor screens is the fact that they can usefully record exposure ratios in excess of 500 : 1.

However, the ultimate visual reproduction of the information contained in the photostimulable phosphor screens, whether on film or on a CRT (or other) display, must involve a form of contrast enhancement to produce a visually satisfactory density difference. Due to contrast dynamic range limitations present in any form of display, whether film, CRT or other, only part of the original exposure range can be satisfactorily examined. This problem can be solved by making a series of soft or hard copies each representing a different part of the total original exposure range. For example in computerised tomography it is common practice to display different windows (parts of the total grey scale) side by side.

It is evident that this solution is expensive and reduces the efficiency.

European patent application 182 423 discloses an image processing method according to the pre-amble of claim 1. The correction signal used in this application is an unsharp mask signal. The unsharp mask signal is a median of the image signal or digital data of the picture elements in an unsharp mask. Frequency processing is conducted using the unsharp mask signal.

Objects of the invention

It is an object of the present invention to provide a method of enhancing the image quality for diagnostic purposes in a reproduction of an image of an object or a patient that/who has been exposed to radiation.

Ii is a further object to provide such a method in a system wherein x-rays transmitted through a patient or an object are recorded on a photostimulable phosphor screen and wherein the emission of the phosphor screen upon stimulation with laser light is detected, converted into an electrical signal and used for controlling the reproduction.

It is still a further object to provide a method of decreasing the dynamic range of signal values of an image representing signal obtained by scanning a photostimulable phosphor screen so that the signal values can be optimally mapped onto the useful density range of a recording material without introducing disturbing artefacts and without losing diagnostically relevant data.

Still a further object is to reduce the total number of soft or hard copies required for displaying the total available amount of data for diagnosis.

Further objects will become apparent from the description given hereinbelow.

Summary of the invention

The invention provides a method of generating an enhanced visual image of an image represented by an original image signal, by applying a correction signal to said original image signal so as to generate a corrected image signal, and by utilizing said corrected image signal to control modulation of a recording beam so as to generate a visual image, wherein (i) said image is a radiation image that has been stored in a photostimulable phosphor screen by exposing said screen to said radiation image, and (ii) said original image signal is obtained by scanning said phosphor screen by means of stimulating radiation, detecting light emitted upon stimulation and converting detected light into an original image signal O(x,y) wherein (x,y) represent coordinates of a pixel of said image, characterised in that (iii) said correction signal is obtained by the steps of

- selecting a mathematical function F(x,y) of at least one of the coordinates x,y of a pixel of said image, said function being represented by the mathematical equation

$$F(x,y) = \sum_i a_i x^i + \sum_j b_j y^j$$

wherein a, b are coefficients, and
- approximating said original image signal O(x,y) by means of said function F(x,y) so as to generate a correction signal that is a function of the coordinates (x,y) and that is related to the local mean exposure level.

The method can be used in medical applications but also in non-destructive testing when an image of an object to be tested is stored on a photostimulable phosphor screen.

The method is particularly advantageous in that the range occupied by the processed signal values is decreased relative to the range occupied by the unprocessed signal values. When an image that is processed according to the present invention is reproduced on a recording material the corrected signal values can be more optimally mapped onto the density range on the film so that optimal detail contrast in a large exposure range is obtained and that the image quality for diagnostic purposes is optimal. The method of the present invention overcomes the disadvantages of the above described prior art method of making a series of displays each representing a different part of the total original exposure range.

The term "image" is meant to cover both the stored radiation image in its totality as it results from exposure of an object or a patient and also the image that is obtained when the image signal is processed so that only the diagnostically relevant region is retained. This diagnostically relevant region can be determined through manual or automatic segmentation.

The modulation of the recording beam in the recorder is controlled by the processed signal itself or by a signal obtained by subjecting the processed signal to a conversion, for example a sensitometric conversion. Such a conversion provides a mapping of the signal values of the processed signal to specific density values to be obtained in the reproduction, so that the image screen exposure represented by an electrical signal is translated into output density so that a predetermined sensitometry in the reproduction is obtained.

The recording can be performed so as to obtain a visible image on a hard copy material for example on photographic film. It will be clear that scanning of a phosphor in a CRT-display apparatus (monitor) with an electron beam that is modulated by the processed image signal so that a soft copy is obtained falls within the scope of the present invention.

It is generally known that monitors have an even more limited dynamic range than photographic film. Hence the advantages of the method of the present invention are often even much more pronounced in the display of a radiologic image on a monitor.

In a specific embodiment the original image signal is represented in a logarithmic form. In this case the correction signal is subtracted from the original image signal. Other forms of the original image signal as well as other arithmetic operations (division, multiplication...) fall within the scope of the present invention. Hereinbelow the term subtraction can be replaced by other arithmetic operations depending on the form of the original image signal.

The correction signal in the method of the present invention is preferably normalised to prevent loss of detail. In the specific embodiment wherein the original image signal is represented in logarithmic form, the correction signal is determined so that at least one pixel has zero value, the others being non-negative.

The correction signal can be a predetermined signal corresponding to the type of examination. The correction signal is a function of at least one of the location determining coordinates of each pixel in the image area and is related to the expected local mean exposure level. By the expected local mean exposure level is meant a local mean exposure level that is determined through experience gained from examination of a large number of exposures or through calculation taking into account the data of a large number of exposures.

More important, such a correction signal can be computed from the original image signal itself in such a way that it is function of at least one of the location determining coordinates of each pixel and that it is related to the computed local mean exposure value of said image.

In an image area each pixel can be defined by its location within the image area, in other words by its coordinates $(x,y)$ and by its pixel value $P(x,y)$ corresponding to the signal value detected by stimulating the phosphor screen in that location with coordinates $(x,y)$ and detecting the stimulated emission.

The inventors have found that it is advantageous to apply to the original image signal a correction signal having signal values obtained as a linear function of the coordinate(s) in each pixel, for example Delta $P(x,y) = ax+b$, Delta $P(x,y)=a+by$, Delta $P(x,y)=a+bx+cy$ etc. This kind of function provides an adequate amelioration of the image quality without demanding a lot of calculation time.

The functions Delta $P(x,y)=ax+b$ and Delta $P(x,y)=a+by$ are functions of one variable that provide a gradient in one direction. These functions are advantageous for enhancing the image quality of the reproduction of an x-ray image of a hand or a foot when the patient is in a fixed position relative to the exposure table.

Preferably the correction signal approximates the original image signal so that it represents the mean exposure level but not the details that are superposed on this level and that are important for the diagnosis. As a consequence of the application of the correction signal the processed image signal values occupy a smaller range than the original image signal. When reproducing the image corresponding with the processed image signal the processed image values can be more optimally mapped onto the density range on the film so that optimal detail contrast within a large dynamic range is obtained and the image quality for diagnostic purposes is optimal.

This method provides in addition to the advantages of the method applying a fixed preselected function that the correction function can be adapted to the anatomy of the patient who has been exposed.

Also in the present method it is advantageous to subtract from the original image signal a signal equal to a linear function of the coordinate(s) in each pixel, for example Delta $P(x,y) = ax+b$, Delta $P(x,y)=a+by$, Delta $P(x,y)=a+bx+cy$ etc. This kind of functions provides an adequate amelioration of the image quality without demanding for a lot of calculation time.

It may be useful in some applications to have a more complicated correction, namely by using a higher degree polynome.

For the purpose of limiting the calculation time of the correction, functions of the following kind are advantageous: Delta $P(x,y)=A.F(x)+B.G(y)+C$ wherein $F(x)$ and $G(y)$ are arbitrary functions. For example in the case of quadratic correction, $F(x)$ equals $ax^2+bx$ and $G(y)$ equals $cy^2+dy$.

In case of a knee-joint good results have been obtained by applying a linear correction in the direction of the bone and a parabolic correction in the direction perpendicular to the direction of the bone.

The coefficients of the functions are determined taking into account the original image information by means of the approximation method of the linear least squares.

Polynomes having coefficients that can be calculated by means of linear approximation of the linear least squares are preferred since the calculation requires a reasonable amount of calculation time.

For example the coefficicients of the function Delta $P(x,y) = ax^2+bx+cy^2+dy+e$ can be obtained by solving the following system of linear equations represented in matrix configuration:

$$
\begin{vmatrix}
\sum x^4_i & \sum x^3_i & \sum x^2_i y^2_i & \sum x^2_i y_i & \sum x^2_i \\
\sum x^3_i & \sum x^2_i & \sum x_i y^2_i & \sum x_i y_i & \sum x_i \\
\sum x^2_i y^2_i & \sum x_i y^2_i & \sum y^4_i & \sum y^3_i & \sum y^2_i \\
\sum x^2_i y_i & \sum x_i y_i & \sum y^3_i & \sum y^2_i & \sum y_i \\
\sum x^2_i & \sum x_i & \sum y^2_i & \sum y_i & N
\end{vmatrix}
\times
\begin{vmatrix} a \\ b \\ c \\ d \\ e \end{vmatrix}
=
\begin{vmatrix}
\sum p_i x^2_i \\
\sum p_i x_i \\
\sum p_i y^2_i \\
\sum p_i y_i \\
\sum p_i
\end{vmatrix}
$$

wherein

$$ \sum = \sum_{i=1}^{\sim}, $$

$i : 1 ... n$, n being the number of pixels in an image, $x_i$ and $y_i$ being coordinates of a pixel, $p_i$ being the pixel value.

The choice of the coordinate system is important since one is dealing with a great number of pixels (more than five million pixels in an image) so that the calculation of the above equations may become very time-consuming. By the choice of the coordinate system so that the image area reaches from $-L/2$ to $L/2$ and from $-K/2$ to $K/2$ (L being the number of pixels per column and K being the number of pixels in one line of the image area) the number of calculations to be performed is reduced so that the method becomes feasible without the need of a high performant computer and can be performed on-line.

The present invention does not exclude that irradiation transmitted by a patient or an object is initially stored in a gradual photostimulable screen so that an enhancement of the signal to noise ratio is obtained in those regions where only a small amount of photons exposes the screen.

Gradual photostimulable screens can be manufactured following the method disclosed under Nr. 28764 in Research Disclosure Nr. 287 (March 1988) provided that the described conventional phosphor is replaced by a photostimulable phosphor, for example one of the phosphors described in European patent application EP,A,0,503,702.

The gradual photostimulable phosphor screen can be selected so that it is adapted to a certain type of examination (for example: hand, foot, lumbar spine). It is not necessary nor possible to adapt the extent and form of their speed variations entirely to the anatomy of the patient being examined. When the gradual stimulable phosphor screen is stimulated and read-out it can further be processed according to the present invention by application of a correction signal to the image signal, said correction signal being a function of at least one of the location determining coordinates of each pixel and being related to the mean exposure value.

Description of the drawings

Particular aspects of the present invention and preferred embodiments hereof will be explained hereinbelow with reference to the drawings in which

figure 1 generally illustrates an apparatus in which the method of the present invention is applied,

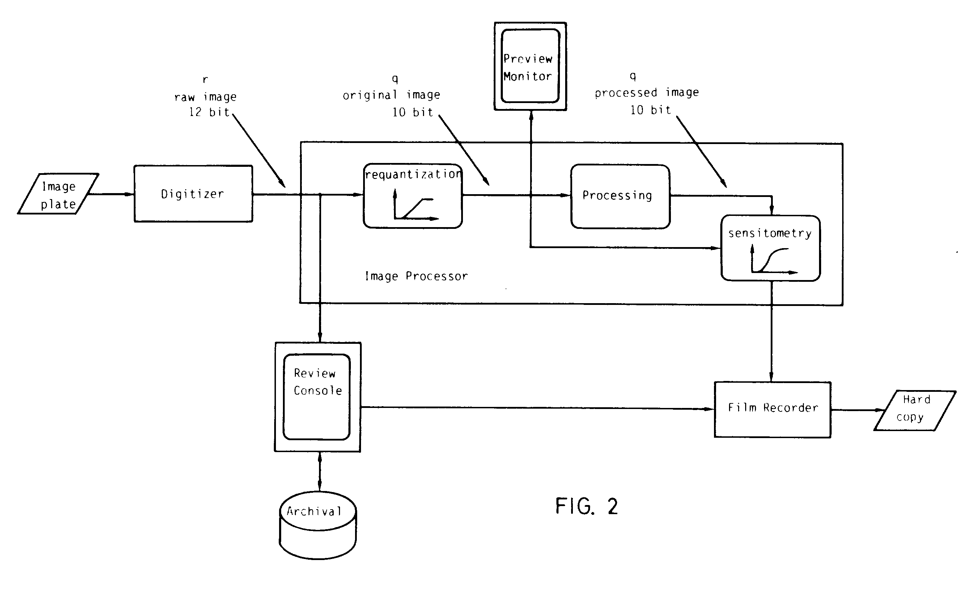

figure 2 illustrates the data path,
figure 3 illustrates the effect of the method of the present invention applied to a fictive image signal,
figure 4a is a histogram of an image of a knee-joint,
figure 4b is a histogram corresponding with the image signal of the same knee-joint subjected to a linear correction in the direction of the leg and a parabolic correction in a direction perpendicular to the leg,
figure 4c is a histogram of the image signal of the same knee joint subjected to a parabolic correction in the direction of the leg and a parabolic correction in a direction perpendicular to the leg direction.

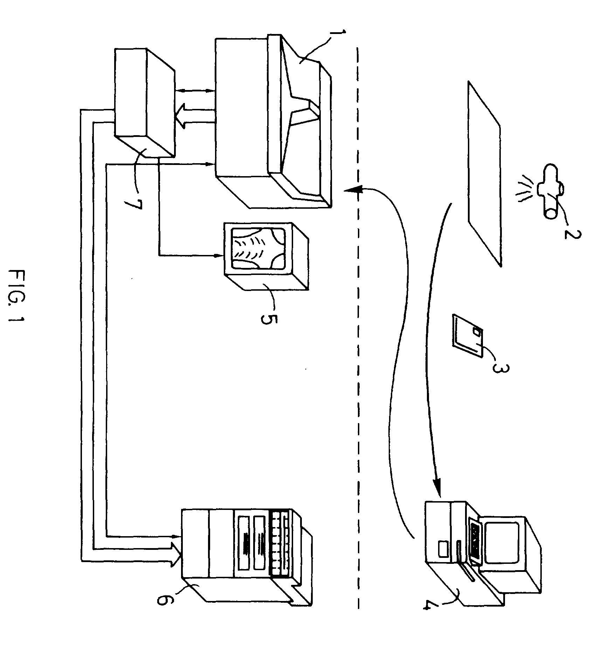

Figure 1 generally shows an apparatus in which the method of the invention can be applied.

A radiation image of an object or part thereof, e.g. a patient, is recorded onto a photostimulable phosphor screen by exposing (2) said screen to x-rays transmitted through the object. The stimulable phosphor screen is conveyed in a cassette (3), in the present embodiment the cassette is provided with a electrically erasable programmable read only memory (EEPROM). In an identification station 4 various kinds of data, for example patient identification data (name, date of birth) and data relating to the exposure and/or to the signal processing are recorded onto the EEPROM.

In a digitizer 1 the latent image stored in the photostimulable phosphor sheet is read-out by scanning the phosphor sheet with stimulating rays emitted by a laser. The stimulating rays are deflected into the main scanning direction by means of galvanometric deflection. The subscanning is performed by transporting the phosphor sheet in the subscanning direction. The stimulated emission is directed onto a photomultiplier for conversion into an electrical image representation.

The output signal of the photomultiplier is converted into a logaritmic quantity.

Next, the signal is quantised to 12 bit, this quantised image is called the raw image. This 12 bit image signal is sent to the image processor (figure 1, numeral 7) where it is stored in an internal buffer. Without any modifications it is also sent from the image processor to the review console where it is temporarily stored on a hard disc. This back up ensures that the signal is never lost, even not when any of the components of the apparatus would fail and that the signal can be retrieved for any kind of later processing, for example processing with different parameter setting.

This feature will be used when the result of the on-line processing is unsatisfactory due to bad exposure conditions or inadequate selection of the processing parameters. The raw image can also be archived on optical disc (not shown).

The latitude of the 12 bit image is too large to be printed on film, it is about 2.7 decades. The actual object latitude is limited to 1.5 decades, or even lower for most of the applications. The remaining 1.2 decades of dynamic range of the digitizing system establish a safe margin for under- or over-exposure. The actual object exposure latitude and level have to be determined for each acquired image in order to confine the effective range of the digital image to the diagnostically relevant region.

The process of confining the dynamic range to the diagnostically useful region is called re-quantisation, as a result hereof the image data is confined to 10 bit, representing an image proportional to log E, E being the exposure. The grey levels below and above the diagnostic region have been clipped to 0 and 1023 respectively.

At this stage the image is transmitted to the preview display 5 which gives a first impression of the acquired data and hence provides for early feedback to the operator in case the acquisition went wrong.

Log E values are then mapped to density values corresponding with a desired sensitometry via a look up table and are applied to a digital to analogue converter, the output of the converter controls the modulator of a laser recorder 6 for making a hard-copy on photographic film.

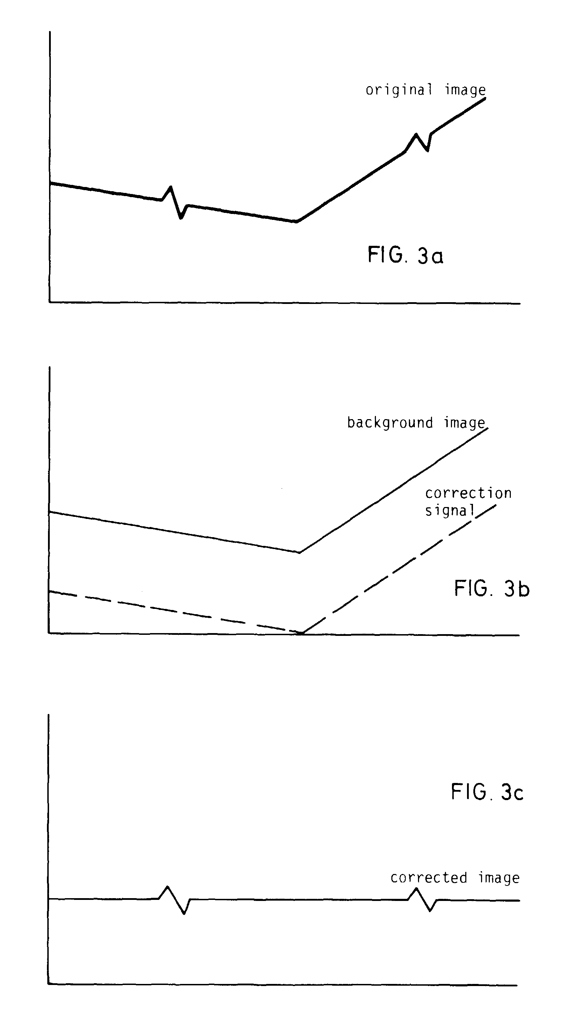

In figure 3 the method of the present invention is illustrated by means of a fictive example. In Figure 3a the abscis is the x-coordinate of a pixel and the ordinate represents the detected signal value in a pixel. For reasons of simplification the example is limited to a one dimensional part of an image (e.g. a line of an image).

In figure 3b the correction signal is depicted. Figure 3c represents the modified image signal obtained by subtracting from the original image signal the correction signal (cfr. fig. 3b). The resulting signal in then applied to modulate the output of a recording head in a recorder or to control the output of a display unit.

From these figures can be learned that the dynamic range of the pixel values that needs to be recorded to obtain an image reproduction is much larger in the incorrected case (cfr. fig.3a) than in the corrected case (fig. 3b) and that by modulating the recording head in correspondence with the corrected signal values the dynamic range of the reproducing material can be used in an optimal way thereby enhancing the image quality of the reproduction.

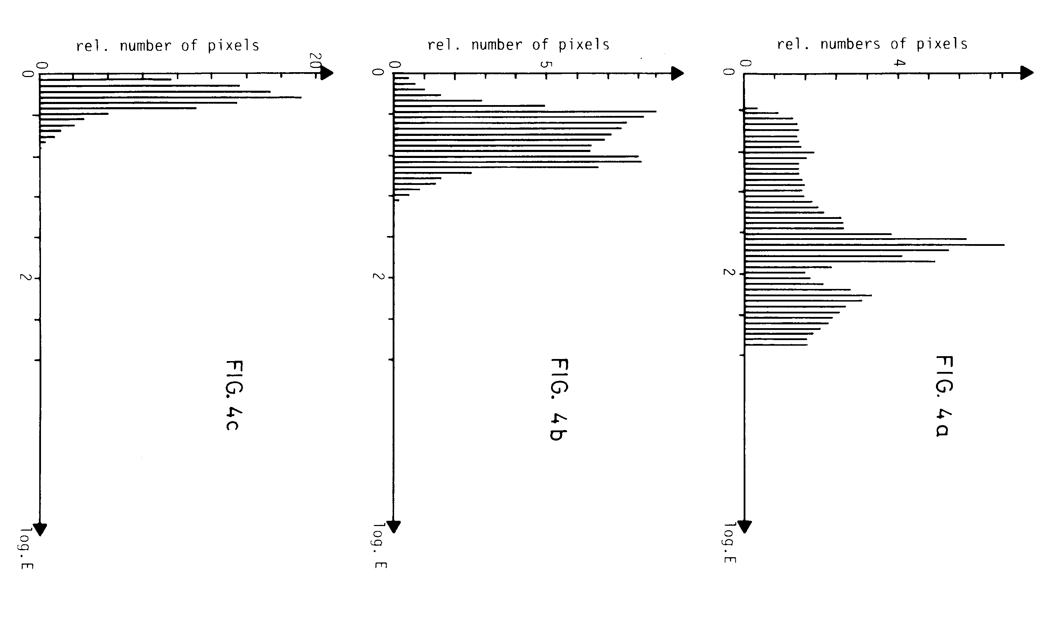

In figure 4a a histogram is shown of the image signal corresponding with an image of a knee-joint. Figures 4b shows a histogram of the image signal of the same knee-joint being subjected to subtraction by a correction signal in accordance with the present invention. In figure 4b a linear correction is performed in the direction of the leg and a parabolic correction is performed in the direction perpendicular to the leg.

In figure 4c the signal of the same knee joint is subjected to a parabolic correction in the direction of the leg and in the direction perpendicular to the leg.

**Claims**

1. A method of generating an enhanced visual image of an image represented by an original image signal, by applying a correction signal to said original image signal so as to generate a corrected image signal, and by utilizing said corrected image signal to control modulation of a recording beam so as to generate a visual image, wherein (i) said image is a radiation image that has been stored in a photostimulable phosphor screen by exposing said screen to said radiation image, and (ii) said original image signal is obtained by scanning said phosphor screen by means of stimulating radiation, detecting light emitted upon stimulation and converting detected light into an original image signal $O(x,y)$ wherein $(x,y)$ represent coordinates of a pixel of said image, characterised in that

    (iii) said correction signal is obtained by the steps of

    - selecting a mathematical function $F(x,y)$ of at least one of the coordinates $x,y$ of a pixel of said image, said function being represented by the mathematical equation

$$F(x,y) = \sum_i a_i x^i + \sum_j b_j y^j$$

    wherein $a$, $b$ are coefficients, and

    - approximating said original image signal $O(x,y)$ by means of said function $F(x,y)$ so as to generate a correction signal that is a function of the coordinates $(x,y)$ and that is related to the local mean exposure level.

2. A method according to claim 1 wherein said function $F(x,y)$ is a function of a single coordinate of a pixel in said radiation image.

3. A method according to claim 1 wherein said function $F(x,y)$ is a linear function of at least one of the coordinates of a pixel in said radiation image.

4. A method according to claim 1 wherein said function $F(x,y)$ is a quadratic function of at least one of the coordinates of a pixel in said radiation image.

5. A method according to claim 1 wherein said original image signal is approximated by the method of the linear least squares.

6. A method according to claim 1 wherein said screen is a gradual photostimulable phosphor screen.


**Patentansprüche**

1. Verfahren zur Erzeugung eines verbesserten sichtbaren Bildes eines durch ein Ausgangsbildsignal dargestellten Bildes durch Anlegen eines Korrektursignals an das Ausgangsbildsignal zur Erzeugung eines korrigierten Bildsignals und durch Verwenden des korrigierten Bildsignals zur Steuerung der Modulation eines Aufzeichnungsstrahls zur Erzeugung eines sichtbaren Bildes, wobei (i) das Bild ein Strahlungsbild ist, das in einem photostimulierbaren Leuchtstoffschirm durch Belichten des Schirms mit dem Strahlungsbild gespeichert worden ist, und (ii) das Ausgangsbildsignal erhalten wird, indem der Leuchtstoffschirm mittels anregender Strahlung abgetastet wird, das nach Anregung emittierte Licht erfaßt und das erfaßte Licht in ein Ausgangsbildsignal $O(x, y)$ umgewandelt wird, wobei $(x, y)$ Koordinaten eines Bildelements des Bildes darstellen, dadurch gekennzeichnet, daß

    (iii) das Korrektursignal durch folgende Schritte erhalten wird:

    - Wählen einer mathematischen Funktion $F(x, y)$ mindestens einer der Koordinaten $x$, $y$ eines Bildelements des Bildes, wobei die Funktion durch die mathematische Gleichung

$$F(x,y) = \sum_i a_i x^i + \sum_j b_j y^j$$

dargestellt wird, wobei a, b Koeffizienten sind, und

- Approximieren des Ausgangsbildsignals O (x, y) mittels der Funktion F (x, y), um ein Korrektursignal zu erzeugen, das eine Funktion der Koordinaten (x, y) ist und das zu dem örtlichen mittleren Belichtungsniveau in Beziehung steht.

2. Verfahren nach Anspruch 1, bei dem die Funktion F (x, y) eine Funktion einer einzelnen Koordinate eines Bildelements in dem Strahlungsbild ist.

3. Verfahren nach Anspruch 1, bei dem die Funktion F (x, y) eine lineare Funktion mindestens einer der Koordinaten eines Bildelements in dem Strahlungsbild ist.

4. Verfahren nach Anspruch 1, bei dem die Funktion F (x, y) eine quadratische Funktion mindestens einer der Koordinaten eines Bildelements in dem Strahlungsbild ist.

5. Verfahren nach Anspruch 1, bei dem das Ausgangsbildsignal durch das Verfahren der linear kleinsten Quadrate approximiert wird.

6. Verfahren nach Anspruch 1, bei dem der Schirm ein gradueller photostimulierbarer Leuchtstoffschirm ist.

**Revendications**

1. Procédé de génération d'une image visuelle rehaussée d'une image représentée par un signal d'image d'origine, en appliquant un signal de correction audit signal d'image d'origine de manière à générer un signal d'image corrigé, et en utilisant ledit signal d'image corrigé pour commander la modulation d'un faisceau d'enregistrement de manière à générer une image visuelle, dans lequel (i) ladite image est une image de radiation qui a été stockée dans un écran au phosphore photostimulable en exposant ledit écran à ladite image de radiation, et (ii) ledit signal d'image d'origine est obtenu en balayant ledit écran au phosphore au moyen d'une radiation de stimulation, en détectant la lumière émise à la stimulation et en convertissant la lumière détectée en un signal d'image d'origine O(x,y) où (x,y) représentent les coordonnées d'un élément d'image de ladite image, caractérisé en ce que
   (iii) ledit signal de correction est obtenu par les étapes de

   - sélection d'une fonction mathématique F(x,y) d'au moins une des coordonnées x,y d'un élément d'image de ladite image, ladite fonction étant représentée par l'équation mathématique

$$F(x, y) = \sum_i a_i\, x^i + \sum_j b_j\, y^j \qquad\qquad \mathbf{3}$$

   où a, b sont des coefficients, et
   - approximation dudit signal d'image d'origine O(x,y) au moyen de ladite fonction F(x,y) de manière à générer un signal de correction qui est une fonction des coordonnées (x,y) et qui est lié au niveau d'exposition moyen local.

2. Procédé selon la revendication 1, dans lequel ladite fonction F(x,y) est une fonction d'une seule coordonnée d'un élément d'image dans ladite image de radiation.

3. Procédé selon la revendication 1, dans lequel ladite fonction F(x,y) est une fonction linéaire d'au moins l'une des coordonnées d'un élément d'image dans ladite image de radiation.

4. Procédé selon la revendication 1, dans lequel ladite fonction F(x,y) est une fonction quadratique d'au moins l'une des coordonnées d'un élément d'image dans ladite image de radiation.

5. Procédé selon la revendication 1, dans lequel ledit signal d'image d'origine est approximé par le procédé des moindres carrés linéaires.

6. Procédé selon la revendication 1, dans lequel ledit écran est un écran au phosphore photostimulable graduel.

FIG. 1

FIG. 2

original image

FIG. 3a

background image

correction
signal

FIG. 3b

FIG. 3c

corrected image

FIG. 4a

FIG. 4b

FIG. 4c